# EUROPÄISCHE PATENTSCHRIFT

(11) **EP 2 697 543 B1**
(45) Veröffentlichungstag und Bekanntmachung des Hinweises auf die Patenterteilung: **25.05.2016**
(21) Anmeldenummer: 12724069.5
(22) Anmeldetag: 29.02.2012
(51) Int. Cl.: F16J 15/3212, F16J 15/3208, F16J 15/3216, F16J 15/3276, B63H 23/32

(54) **DICHTUNG ZUM ABDICHTEN VON WELLEN**
SEAL FOR SEALING SHAFTS
JOINT D'ÉTANCHÉITÉ D'ARBRES

(30) Priorität: 11.04.2011 DE 102011018584
(43) Veröffentlichungstag der Anmeldung: 19.02.2014
(73) Patentinhaber: Blohm + Voss Industries GmbH, 20457 Hamburg (DE)
(72) Erfinder: VON BERGEN, Ernst, Peter, 24811 Ahlefeld (DE); ZIEMEN, Lars, 22335 Hamburg (DE); FANGAUF, Carlos, 20259 Hamburg (DE); VON BORSTEL, Dieter, 21720 Guderhandviertel (DE); WÜSTENHAGEN, Guido, 21077 Hamburg (DE); RISTIC, Ivan, 22337 Hamburg (DE)
(74) Vertreter: Marschall, Stefan
(86) Internationale Anmeldenummer: PCT/DE2012/000228
(87) Internationale Veröffentlichungsnummer: WO 2012/139541

(56) Entgegenhaltungen:
- DE-A1- 3 742 080
- DE-C2- 4 141 999
- FR-A1- 2 059 644
- US-A- 2 482 029
- US-A- 5 269 539

## Beschreibung

Die Erfindung bezieht sich auf eine Dichtungsanordnung zum Abdichten von Wellen gegenüber flüssigen Medien, wie Propellerwellen, Flügelradwellen, Ruderschäften von Schiffen, umfassend eine Dichtung, die über ein Einspannelement in zugeordneten gehäusefesten Stützringen als Einbauraum aufgenommen ist, wobei das Einspannelement mit einem anschliessenden Zwischenteil als Membran und einem der Welle zugewandten abgewinkelten Element mit Ausbildung einer Dichtlippe zur Anlage auf der Welle aufweist und im abgewinkelten Element oberhalb der Dichtlippe eine Aufnahmerinne mit einer Feder angeordnet ist.

Dichtungen dieser Art sind in unterschiedlichen Ausführungen zum Einsatz für Schiffe bekannt. Eine gattungsgemäße Ausbildung ist nach der DE 41 41 999 C2 bekannt. Hierbei hat sich herausgestellt, dass unter erhöhter Druckbeaufschlagung die Anpassungsfähigkeit der Dichtkantengeometrie und Einstellung des abgewinkelten Bereiches keine optimalen Verhältnisse zeigt.

Nach der FR 2 059 644 A1 ist eine Dichtungsanordnung bekannt, die eine Aufnahmerinne als Federtasche mit einem Freiraum aufweist.

Die Aufgabe der Erfindung ist es, eine Dichtungsanordnung mit einer guten Einstellbarkeit der Dichtung zu schaffen und eine Einstellung der Dichtung unter Berücksichtigung der vorliegenden Verhältnisse zu gewährleisten.

Die Lösung dieser Aufgabe erfolgt erfindungsgemäß dadurch, dass die Aufnahmerinne als Federtasche (11) mit einem Freiraum (12) für die Feder (10) im drucklosen Zustand ausgebildet ist, wobei die Membran durch Änderung seines Anstellwinkels (psi) bei Druckbeaufschlagung bis zum Erreichen eines Grenzdrucks zur Anlage an eine zugeordnete Gehäusewandung, wie einem verlängerten Stützring, verstellbar ist und ein vergrößerter bodenseitiger Kontaktwinkel (beta) im abgewinkelten Bereich mit der Dichtlippe einstellbar ist, wobei an der Membran oberhalb der Federtasche eine Nase als Rückhalteelement für die eingesetzte Feder angeordnet ist.

Hierdurch sind durch eine Veränderung des Kontaktwinkels bei Druckbeaufschlagung relativ gute Verhältnisse zur Bildung von Kontaktflächen mit günstigen Winkelverhältnissen bei hoher Pressung einstellbar, wobei eine Sicherung der eingesetzten Feder erfolgt.

Ferner wird vorgeschlagen, dass der Freiraum der Federtasche eine Tiefe von 5 bis 30 % eines Federdurchmessers aufweist.

Zur Bildung einer vorteilhaften Kontaktfläche der Dichtung wird vorgeschlagen, dass die Dichtlippe zur Anlage auf der Welle durch einen abgerundeten Endbereich des abgewinkelten Elementes gebildet ist.

Ferner wird vorgeschlagen, dass mindestens der Bereich der Dichtlippe aus einem verschleißfesteren Elastomer gegenüber dem Werkstoff des weiteren Teils der Dichtung gebildet ist.

In der Zeichnung ist ein Ausführungsbeispiel der Erfindung schematisch dargestellt. Es zeigen:

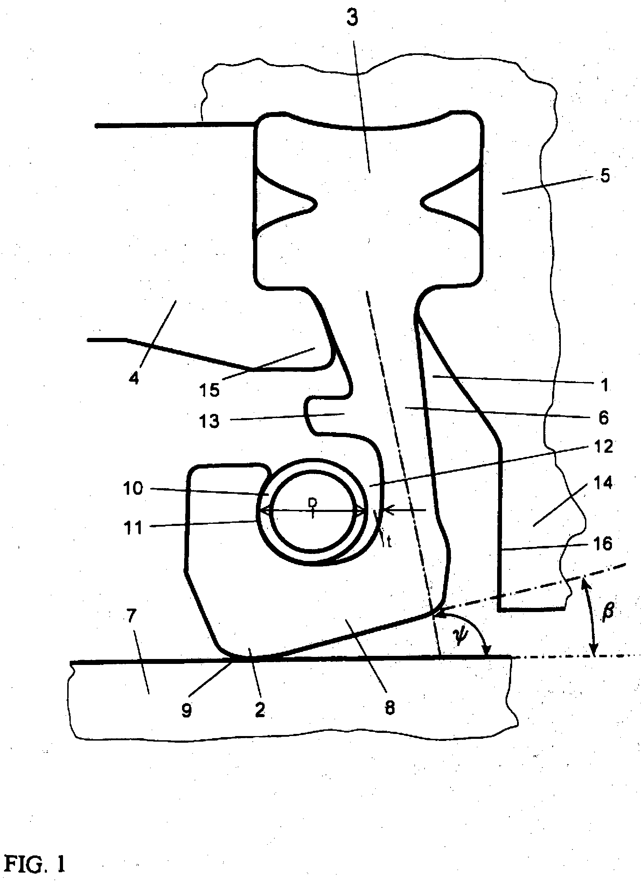

Fig. 1 eine Dichtung in Zuordnung zu einer Welle bei Normaldruck und

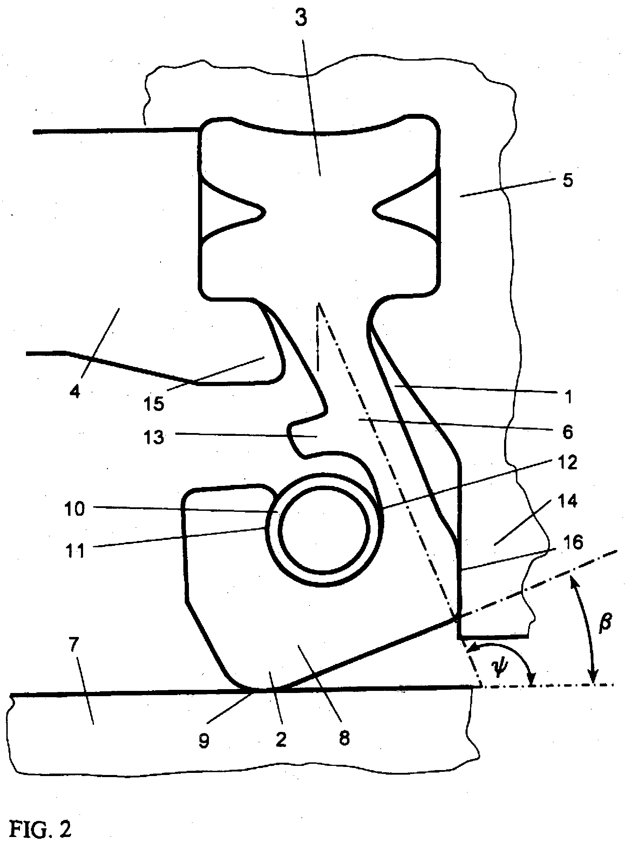

Fig. 2 eine Darstellung wie Fig. 1 bei hohem Druck.

Die dargestellte Dichtung 1 ist aus einem gummielastischen Material, wie einem Elastomer, gebildet, wobei mindestens der Bereich einer gebildeten Dichtlippe 2 aus einem verschleißfesten Elastomer als der Werkstoff des weiteren Teils der Dichtung 1 gebildet ist.

Die Dichtung 1 besteht aus einem oberen Einspannelement 3, das in gehäusefesten metallischen Stützringen 4, 5 flüssigkeitsdicht in bekannter weise eingespannt ist. An das Einspannteil 3 der Dichtung 1 schließt sich ein Zwischenteil 6 als Membran an, das unter einem Winkel psi als Anstellwinkel gegenüber einer Horizontalen (Welle 7) ausgebildet ist.

Das Zwischenteil 6 ist mit einem einer abzudichtenden Welle 7 zugewandten abgewinkelten Bereich 8 der Dichtung verbunden und bildet mit seinem Endbereich die Dichtlippe 2, die die auf der welle 7 mit einem bodenseitigen Kontaktwinkel beta aufliegt. In dieser Ausbildung ist die Dichtlippe 2 durch einen abgerundeten Endbereich 9 des abgewinkelten Bereiches 8 der Dichtung 1 gebildet.

Zur Bildung eines Anpressdruckes der Dichtlippe 2 auf die Welle 7 ist neben dem elastischen Rückstellelement des abgewinkelten Bereiches 8 der Dichtung 1 eine zugeordnete Feder 10 vorgesehen. Die Feder 10 mit einem Durchmesser D ist dabei in einer Aufnahmerinne 11 als Federtasche aufgenommen und besitzt dabei einen gebildeten Freiraum 12 mit einer Freiraumtiefe t, die eine flexible Einstellung des abgewinkelten Bereiches 8 der Dichtung 1 ermöglicht. Zur Sicherung der Feder 10 ist oberhalb der Aufnahmerinne 11 eine Nase 13 als Rückhalteelement an der Membran als Zwischenteil 6 angeordnet. Die Freiraumtiefe beträgt vorzugsweise 15 % des Federdurchmessers D.

Durch diese Anordnung ist es möglich, den bodenseitigen Kontaktwinkel beta der Dichtlippe 2 zur Welle 7 bei Druckbeaufschlagung zu vergrößern und damit entsprechend flexibel einzustellen und eine Abdichtfläche zu verkleinern, so dass sich eine günstige Berührbereite einstellt.

Zur Begrenzung des Anstellwinkels psi der Dichtung 1 bei Erreichen eines vorgesehenen Grenzdrucks des abzudichtenden Mediums ist eine Wandung 16 gehäusefest angeordnet. Hierzu ist der dem abzudichtenden Medium abgewandten Stützring 5 verlängert und besitzt einen radial bis in den Bereich der Wellenoberfläche geführten Teil 14, während der dem abzudichtenden Medium zugeordnete Stützring mit einem Vorsprung 15 endet.

## Patentansprüche

1. Dichtungsanordnung zum Abdichten von Welle gegenüber flüssigen Medien, wie Propellerwelllen, Flügelradwellen, Ruderschäften von Schiffen, umfassend eine Dichtung (1), die über ein Einspannelement (3) in zugeordneten gehäusefesten Stützringen (4, 5) als Einbauraum aufgenommen ist, wobei das Einspannelement (3) mit einem anschliessenden Zwischenteil als Membran (6) und einem der Welle (7) zugewandten abgewinkelten Element (8) mit Ausbildung einer Dichtlippe (2) zur Anlage auf der Welle (7) aufweist und im abgewinkelten Element (8) oberhalb der Dichtlippe (2) eine Aufnahmerinne (11) mit einer Feder (10) angeordnet ist, **dadurch gekennzeichnet, dass** die Aufnahmerinne als Federtasche (11) mit einem Freiraum (12) für die Feder (10) im drucklosen Zustand ausgebildet ist, wobei die Membran (6) durch Änderung seines Anstellwinkels (psi) bei Druckbeaufschlagung bis zum Erreichen eines Grenzdrucks zur Anlage an eine zugeordnete Gehäusewandung (16), wie einem verlängerten Stützring (5), verstellbar ist und ein vergrößerter bodenseitiger Kontaktwinkel (beta) im abgewinkelten Bereich (8) mit der Dichtlippe (2) einstellbar ist, wobei an der Membran (6) oberhalb der Federtasche (11) eine Nase (13) als Rückhalteelement für die eingesetzte Feder (10) angeordnet ist.

2. Dichtung nach Anspruch 1, dadurch gekenntzeichnet, dass der Freiraum (12) der Federtasche (11) eine Tiefe (t) von 5 bis 30 % eines Federdurchmessers (D) aufweist.

3. Dichtung nach Anspruch 1 oder 2, **dadurch gekennzeichnet, dass** die Dichtlippe (2) zur Anlage auf der Welle (7) durch einen abgerundeten Endbereich (9) des abgewinkelten Elementes (8) gebildet ist.

4. Dichtung nach einem der Ansprüche 1 bis 3, **dadurch gekennzeichnet, dass** mindestens der Bereich der Dichtlippe (2) aus einem verschleißfesteren Elastomer gegenüber dem Werkstoff des weiteren Teils der Dichtung (1) gebildet ist.

## Claims

1. A sealing arrangement for sealing shafts relative to liquid media, such as propeller shafts, impeller shafts, rudder shafts of ships, comprising a seal (1), which via a clamping element (3) is received in associated housing-fixed support rings (4, 5) as installation space, wherein the clamping element (3) comprises a following intermediate part as membrane (6) and an angled element (8) facing the shaft (7) with formation of a sealing lip (2) for contacting the shaft (7) and in the angled element (8) above the sealing lip (2) a receiving channel (11) with a spring (10) is arranged, **characterized in that** the receiving channel is designed as spring pocket (11) with a free space (12) for the spring (10) in the pressureless state, wherein the membrane (6) by way of changing its setting angle (PSI) upon admission of pressure is adjustable pending the reaching of a limit pressure for contacting an associated housing wall (16), such as an extended support ring (5) and an enlarged bottom-side contact angle (beta) in the angled region (8) with the sealing lip (2) is adjustable, wherein on the membrane (6) above the spring pocket (11) a lug (13) as retaining element for the inserted spring (10) is arranged.

2. The seal according to Claim 1, **characterized in that** the free space (12) of the spring pocket (11) has a depth (t) of 5 to 30% of a spring diameter (D).

3. The seal according to Claim 1 or 2, **characterized in that** the sealing lip (2) for contacting the shaft (7) is formed by a rounded end region (9) of the angled element (8).

4. The seal according to any one of the Claims 1 to 3, **characterized in that** at least the region of the sealing lip (2) is made of a more wear-resistant elastomer relative to the material of the further part of the seal (1).

## Revendications

1. Dispositif d'étanchéité pour l'étanchéification d'arbres par rapport à des milieux liquides, tels des arbres d'hélice, des arbres de roue à ailettes, des mèches de gouvernail de bateaux, comprenant un joint d'étanchéité (1), lequel est réceptionné via un élément de serrage (3) dans des bagues d'appui solidaires du boîtier (4, 5) associées en guise d'espace de logement, dans lequel l'élément de serrage (3) présente une pièce intercalaire à la suite en tant que membrane (6) et un élément coudé (8) tourné vers l'arbre (7) avec formation d'une lèvre d'étanchéité (2) pour l'appui sur l'arbre (7), et dans l'élément coudé (8), au-dessus de la lèvre d'étanchéité (2), une rainure de logement (11) avec un ressort (10) étant disposée, **caractérisé en ce que** la rainure de logement est réalisée en tant que poche de ressort (11) avec un espace libre (12) pour le ressort (10) à l'état détendu, dans lequel la membrane (6) peut être déplacée par modification de son angle d'incidence (psi) en cas d'application d'une pression jusqu'à l'atteinte d'une pression limite pour un appui contre une paroi de boîtier (16) associée, telle une bague d'appui (5) prolongée, et un angle de contact (beta) agrandi côté fond pouvant être réglé dans la zone coudée (8) avec la lèvre d'étanchéité (2), dans lequel un ergot (13) est disposé sur la membrane (6) au-dessus de la poche de ressort (11) en tant qu'élément de retenue pour le ressort (10) mis en place.

2. Joint d'étanchéité selon la revendication 1, **caractérisé en ce que** l'espace libre (12) de la poche de ressort (11) présente une profondeur (t) de 5 à 30% d'un diamètre de ressort (D).

3. Joint d'étanchéité selon la revendication 1 ou 2, **caractérisé en ce que** la lèvre d'étanchéité (2), pour venir en appui sur l'arbre (7), est formée par une zone d'extrémité arrondie (9) de l'élément coudé (8).

4. Joint d'étanchéité selon l'une des revendications 1 à 3, **caractérisé en ce qu'**au moins la zone de la lèvre d'étanchéité (2) est formée par un élastomère plus résistant à l'usure par rapport au matériau de la partie restante du joint d'étanchéité (1).
